(19) Europäisches Patentamt
European Patent Office
Office européen des brevets

(11) EP 0 491 264 B1

(12) **EUROPEAN PATENT SPECIFICATION**

(45) Date of publication and mention
of the grant of the patent:
**12.06.1996 Bulletin 1996/24**

(51) Int Cl.6: **G11B 21/10**, G11B 27/10,
G11B 5/82

(21) Application number: **91121139.9**

(22) Date of filing: **10.12.1991**

(54) **Magnetic disc**

Magnetplatte

Disque magnétique

(84) Designated Contracting States:
**DE FR GB IT NL**

(30) Priority: **18.12.1990 JP 403059/90**

(43) Date of publication of application:
**24.06.1992 Bulletin 1992/26**

(73) Proprietor: **MATSUSHITA ELECTRIC INDUSTRIAL CO., LTD.**
**Kadoma-shi, Osaka-fu, 571 (JP)**

(72) Inventors:
• **Wakabayashi, Noriaki**
**Hirakata-shi, Osaka-fu (JP)**
• **Yoshiura, Tsukasa**
**Katano-shi-shi, Osaka-fu (JP)**

(74) Representative: **Eisenführ, Speiser & Partner**
**Martinistrasse 24**
**28195 Bremen (DE)**

(56) References cited:
**EP-A- 0 181 020**          EP-A- 0 327 207
**US-A- 4 016 603**

## Description

### BACKGROUND OF THE INVENTION

The present invention generally relates to a magnetic disc and a magnetic disc apparatus for recording and reproducing data, and more particularly, to a magnetic disc for obtaining large recording capacity with a special format, and a mass magnetic disc apparatus for recording and reproducing data on it.

Since a magnetic disc apparatus is capable of storing a large quantity of data, and is capable of accessing the data with high speeds with a random access system, it is widely used as a data storage system. Unlike a tape apparatus, the data are recorded on the tracks of many concentric circles on the surface of the disc plate. The tracks on the internal peripheral side are shorter in length than the tracks on the external peripheral side, thus resulting in a higher recording density as the tracks go towards the internal peripheries. On the other hand, since the external peripheral side has a lower recording density, the possibility of further increasing the recording capacity remains by increasing the recording density on the external peripheral side during the magnetic recording operation.

A hard disc apparatus including a positioning apparatus for moving a disc assembly in and out in the radial direction of the disc the disc assembly having many hard discs which are stacked in the axial direction using a hard disc having a magnetic material film on a disc shaped aluminum or a glass basic board, and a head carriage constructed with many magnetic heads being assembled respectively on each face of the disc are well known. In the hard disc apparatus, the one specific face of the stacked disc is not used for data writing, but is used for recording servo-pattern signals necessary for positioning the head carriage. The head is positioned in a selected track by the reproducing operation of the servo-pattern signal. This is called a servo-surface servo-system or a dedicated servo system. Since the data signal recording face and the servo-pattern signal recording face respectively exist independently in the hard disc apparatus of such a system, it is easy to position the head in an optional track, no matter how the format of each track on the data signal recording face is constructed.

US-A-4 016 603 discloses an embedded servo disc wherein tracks on many concentric circles on the data signal recording face are divided into some groups (zones) so as to increase the number of data sectors as the tracks go to the zone of the further external peripheral portion. In this manner, the recording density can be increased comparatively uniformly and within an allowable range. A problem if any is that since the rotational speed of the disc is constant, the peripheral speed is faster as the periphery becomes further external, and thus the data transfer speed in the zone of the external periphery becomes higher.

In the hard disc apparatus with many discs being stacked as described hereinabove, it is easy to adopt such a format as to easily increase the number of data sectors of the zone of the external peripheral portion. But when the number of the discs used is two or one, it is inefficient to use one face thereof for the servo-pattern signal, so that the servo-face servo-system is hard to adopt.

In a hard disc apparatus using only one disc, a data face servo system is widely used which inserts (inserts a servo-sector of extremely narrow width) the servo-pattern signals between one data sector and another data sector, instead of a servo-surface servo-system. This is called an embedded servo system. Namely, the system is a hybrid system of dispersing onto the data signal reproducing face the servo-pattern signals necessary for positioning the head.

A flexible magnetic disc apparatus using a magnetic disc having a magnetic membrane film on a flexible medium such as polyethylene terephthalate or the like is a system most widely used among magnetic disc apparatuses of an exchange type. Recently, flexible magnetic discs have been made with a higher capacity, especially the track density has been made higher, and the track pitch has been made finer, so that a highly precise servo-positioning operation is necessary. Therefore, even in the such flexible magnetic discs, the data face servo-system has been adopted. This is disclosed in detail in, for example, JP-A-63-173282.

But as the servo-sector is grasped between data sectors in the above described data face servo-system, it is difficult to freely effect the data format. It is simple and convenient in the servo control to detect debunching servo-pattern signals for a constant sampling time (debunching time) no matter where a head is located. Namely, the servo-pattern signal (servo-sector) of each track may be disposed at equal angles from the internal periphery of the disc to the external periphery. In other words, it is desirable to have the angle of the data sector formatted at equal angles across the whole surface so that it is incompatible with a method of increasing the number of sectors as the periphery becomes further external.

JP-A-59-116911 defining the closest prior art from which the invention proceeds shows one answer to the problem. Here the track is divided into a plurality of groups (zones), the number of the sectors is increased as the zone of the exterior periphery. Further, servo-sectors are inserted between sectors. In this manner, the servo-sectors are not continuous towards the external periphery from the inner periphery, and the number thereof increases as the peripheral zones. Therefore, the servo-processing has a defect in that a more complicated sequence is required. Therefore, a servo-pattern signal is detected with a constant sampling time from servo sectors formatted at equal angles, with a disadvantage in that the electronic control circuit becomes more complicated than the conventional data face servo system for effecting the servo control. It becomes difficult to move and position heads astride different zones at high speeds. This is because a sampling timing for detecting the servo-pattern signals is different or the sampling period is different among the different zones. Also, a different zone boundary cannot be positioned. Therefore, there is a defect in that the accessing time becomes longer.

## SUMMARY OF THE INVENTION

Accordingly, the present invention has been developed with a view to substantially eliminating the above discussed drawbacks inherent in the prior art. A first object of the present invention is to provide a magnetic disc which increases the sector number on the external periphery side more than the internal peripheral side so as to increase the recording capacity so that a simple data face servo system simple in interchangeability can be used.

A second object of the present invention is to provide a magnetic disc which makes a servo-sector a hard sector, and makes a data sector a soft sector, in other words, makes the former a physical sector, makes the latter a non-physical sector so as to respectively make them independent, and can freely design the format of the data sector without much restriction of the servo-sector.

A third object of the present invention is to provide an efficient magnetic disc provided with a data face servo-system capable of high speed accessing and positioning if the number of data sectors on the external peripheral side is more than the number of data sectors on the internal peripheral side with a plurality of zones having different numbers of data sectors being provided.

A fourth object of the present invention is to provide a magnetic disc which is capable of increased capacity, with the data face servo-control and the positioning mechanism remaining the same as, for example, a flexible magnetic disc apparatus or the like.

In accomplishing these and other objects, according to the present invention, there is provided a magnetic disc comprising a plurality of concentric circular data record tracks formed on the data recording face thereof, said data surface being divided into a number K of concentric track group zones from a first zone on the inside of the disc to a zone K at the outer periperhy, each zone containing a group of tracks with a plurality of data sectors formed thereon, the number (s) of data sectors per track being constant in each track group zone, but varying from zone to zone, characterized in that the data sectors are arranged in data sector groups separated by a number j of servo sectors, J being constant for all track group zones so that the servo sectors are substantially aligned in a radial direction across the disc and the number (s) of data sectors per sector group in a track group zone is calculated on the basis of the following formular:

$$s = K + M,$$

where s, K, J and M are positive integers.

Further advantageous embodiments of the invention are defined in the sub-claims.

The present invention of the above described construction is capable of increasing the record capacity without changing the construction of the servo-sector, a coping operation can be effected with respect to the data face servo-control with processing, using an electronic control circuit which is approximately as simple as those used before.

The servo-sector is connected in a radial pattern towards the external periphery from the internal periphery of the magnetic disc, realizing the capacity increase with the number of data sectors of the external peripheral side zone being made more than the number of data sectors of the internal peripheral side, so that it is easy to access the head with high speed to position it, independently of the zone pause, with the servo detection time interval being almost constant.

As the servo-sector is independent of the data sector, it is easy to increase the record density (to increase the number of data sectors) only in the sector with the servo sector remaining as is even when the record capacity is increased with the adoption of new magnetic material or the like. Especially in the case of a flexible magnetic disc and flexible magnetic disc apparatus, it can easily increase the capacity with the data face servo-control and the positioning mechanism being unchanged.

Also, there is an economic advantage even in this case that a format writer apparatus (servo-writer apparatus), namely, an apparatus for writing servo-pattern signals in the raw disc may be used without being changed.

## BRIEF DESCRIPTION OF THE DRAWINGS

These and other objects and features of the present invention will become apparent from the following description taken in conjunction with the preferred embodiment thereof with reference to the accompanying drawings, in which;

Fig. 1 is a view for illustrating a basic format on the disc recording face in one concrete embodiment a magnetic disc of the present invention;
Fig. 2 is a view of another concrete embodiment of a magnetic disc of the present invention;
Fig. 3 is a view of still another embodiment of the magnetic disc of the present invention; and
Fig. 4 is a sectional view in one embodiment of a magnetic disc apparatus of the present invention.

## DETAILED DESCRIPTION OF THE INVENTION

Before the description of the present invention proceeds, it is to be noted that like parts are designated by like reference numerals throughout the accompanying drawings.

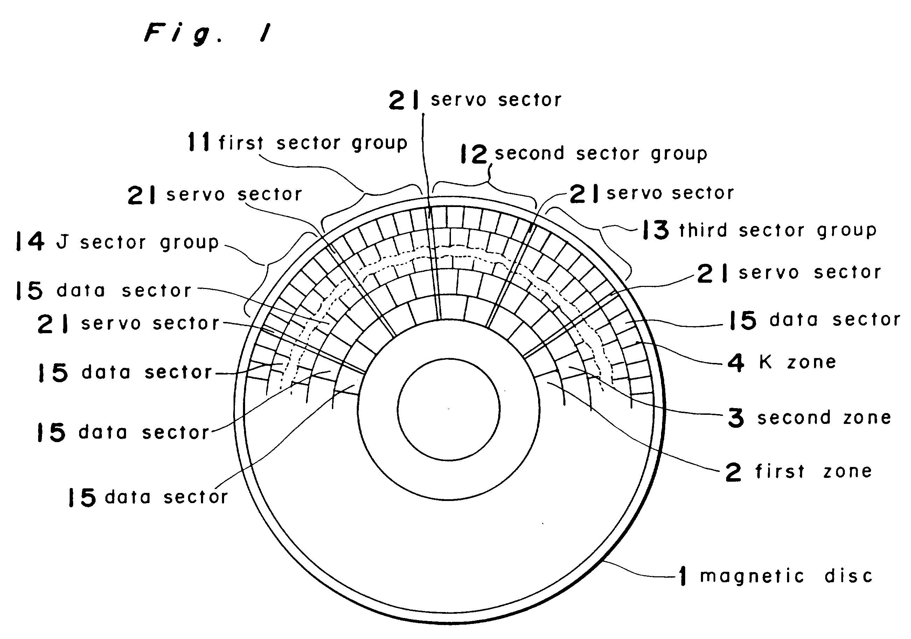

An embodiment of the present invention will be described concretely with reference to the drawings. Fig. 1 is a view for illustrating a basic format on the disc recording face in one concrete embodiment of a magnetic disc of the present invention. A disc plate 1 has a magnetic material film on the surface of a disc-shaped resin film medium like a disc-shaped aluminum or glass base board or a polyethylene terephthalate disc. Although the magnetic patterns of a format stored with a magnetic head cannot be directly seen, Fig. 1 shows the magnetic patterns described as visible. Many concentric circle-shaped tracks formed on the data recording face of the magnetic disc 1 are divided in a radial direction into K groups (zones). Numerals are given in order from the inner peripheral side so that a first zone, a second zone, a K zone are given as shown by 2, 3, and 4. Here K is an integer. A plurality of tracks are included in each zone. Many sectors formed in the track are divided into J sector groups so that the they are respectively equal. Numerals are given in order to provide a first sector group, a second sector group, a third sector group, a J sector group as shown by 11, 12, 13, and 14. Here J is an integer. Assume that each sector group includes at least one data sector 15, with each respective data sector 15 including, for example, 512 bytes of user data. Reference numerals 21 is a plurality of servo-sectors which are narrow in width and which are disposed among the respective sector groups, with J servo-sectors being provided on the full periphery. The servo-sectors are connected to an external peripheral zone of the magnetic disc from the internal peripheral zone and are arranged in approximately a radial line direction. The servo-sector includes servo pattern signals necessary for servo- positioning heads. A positioning apparatus for positioning the heads detects the servo-pattern signals embedded sporadically in the data sector groups so as to position in the selected track of the zone with a head being selected in accordance with the signal. This belongs to a system called a data face servo-system or an embedded servo- system.

Here a number of sectors s to be included in each sector group of each track of a p zone meets the following equation, where M is an integer greater than 1,

$$s = p + M.$$

With this arrangement, the memory capacity can be increased, since the number of sectors for each track in the outer periphery zone is more than that of the inner periperhy zone.

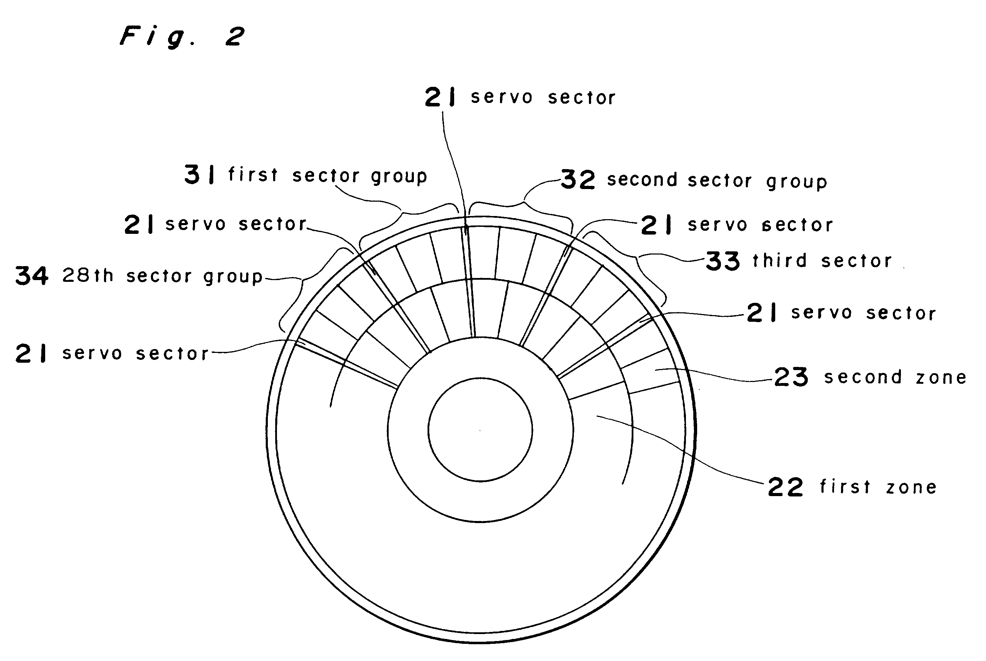

Fig. 2 is a further concrete embodiment of a magnetic disc of the present invention. In Fig. 1, a zone number K is 2, the sector number of a first zone 22 is 2, the sector number of each sector group of the second zone 23 is 3, the number of servo sectors (21) in one revolution is 28. Reference numeral 31 is a first sector group, reference numeral 32 is a second sector group, reference numeral 33 is a third sector group, reference numeral 34 is a twenty eighth sector group. Here the whole number of tracks is 320 with 220 being in the first zone, and 100 being in the second zone. Assume that the user data per sector is 51.2 bytes, so that the format of the user data of 10 megabytes is obtained on one side. Namely, 20 megabytes are obtained from both sides of the disc (in total).

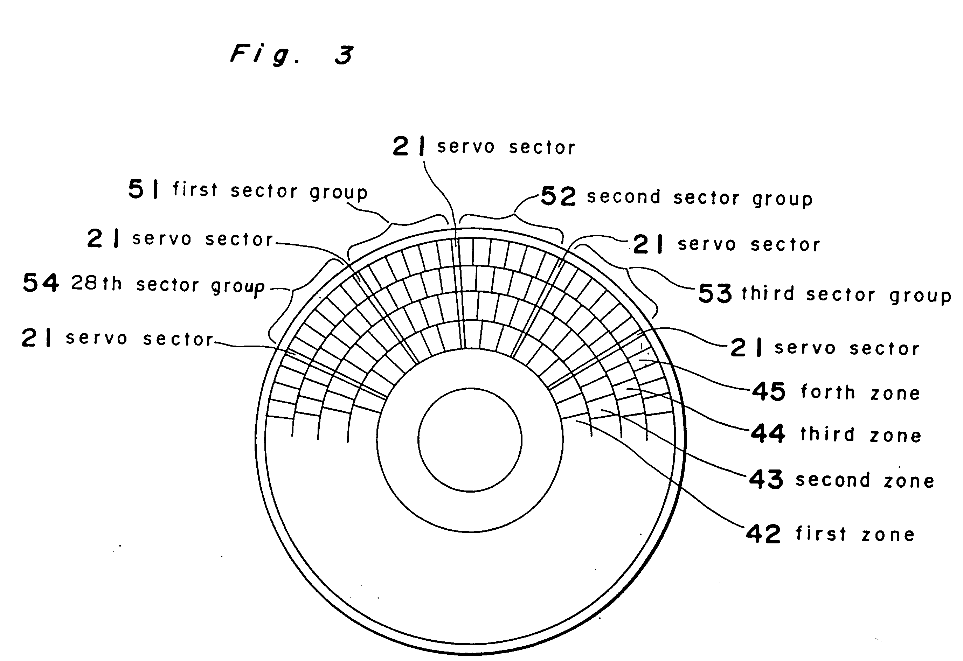

Fig. 3 is a still another embodiment of a magnetic disc of the preset invention. In Fig. 1, the number of servo sectors 21 remains 28 which is the same as that of the embodiment of Fig. 2 with the number of zones K being 4, the number of sector groups J being 28, and M being 2. But the number of sectors of the respective sector groups of the first zone 42 is 3, the number of sectors of the respective sector groups of the second zone 43 is 4, the number of sectors of the respective sector groups of the third zone 44 is 5, and the number of sectors of the respective sector groups of the fourth zone 45 is 6. Reference numeral 51 is a first sector group, reference numeral 52 is a second sector group, reference numeral 53 is a third sector group, reference numeral 54 is a twenty eighth sector group. Assume here that the total number of tracks is 320 with 60 being in a first zone, 70 being in a second zone, 90 being in a third zone, and 100 being in a fourth zone. Assume that the user data per sector is 512 bytes, and the format of the user data of 20 megabytes is obtained on one side. Namely, 40 megabytes on the front surface and the reverse surface of the disc are obtained (in total).

Assume that the user data per sector is 512 bytes with the track number being properly designed with the number of zones K being 3, the number of sector groups J being 28, M being 2, and the format of the user data of 16 megabytes or more is obtained on one side. Namely, 32 megabytes or more are obtained on both sides (in total) of the disc.

The embodiment of the present invention shown in Fig. 2 and Fig. 3 have a constant number of servo sectors. If the track density (track pitch) is the same, the record capacity may be easily increased with the data face servo-control system and the positioning mechanism being as they are. Assume that the fixed servo-sector to be made permanent with the servo-sector and the data sector being separated in this manner is called a hard sector or a physical sector. Also, assume that a data sector which can make freely format independently of it is called a soft sector or a non-physical sector. Of course, the data sector of the soft sector can be freely designed. A magnetic disc using a new magnetic material may make it possible to render the record density higher for a higher resultant capacity.

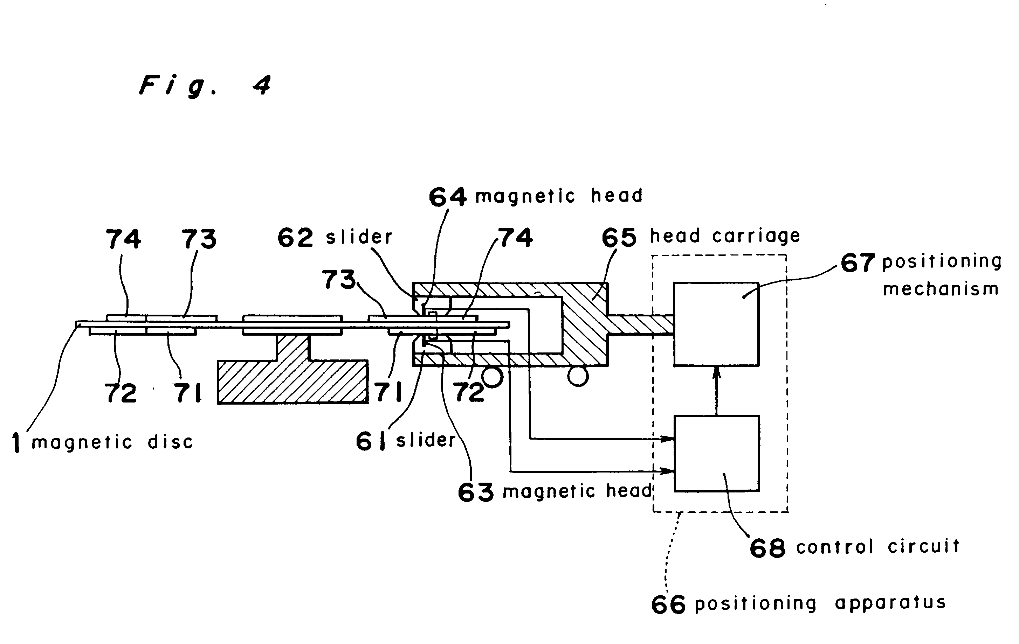

Fig. 4 is a sectional view in one embodiment of a magnetic disc apparatus. Reference numeral 1 is a magnetic disc, reference numeral 61 is a slider with a magnetic head of the face on the side 0 side of the magnetic disc being embedded, reference numeral 62 is a slider with a magnetic head on the face of the side 1 side being embedded in it, with the magnetic heads 63, 64 being provided respectively. Reference numeral 65 is a head carriage, reference numeral 66 is a positioning apparatus including a positioning mechanism 67 for positioning on a selected track the magnetic head, and an electronic control circuit 68 for effecting the data face servo controlling, reference numeral 69 is a spindle motor for rotating the magnetic disc. The electronic control circuit 68 obtains a control signal for positioning the magnetic heads 63, 64 in the track selected through extracting the servo-pattern signals from the debunching servo-sector so as to control the positioning mechanism 67. Reference numeral 71 shows a first zone of the face on the side 0 of the magnetic disc, reference numeral 73 shows a first zone of the face of the side 1 of the magnetic disc, reference numeral 74 shows a second zone.

In the embodiment in Fig. 4, the magnetic disc if it is of one in example has the construction good in adaptability to the magnetic disc apparatus with the use of the flexible magnetic disc of a large capacity. Namely, as the flexible magnetic disc is a thin medium, the magnetic head on the side 0 and the side 1 causes magnetic interferences with each other, so the position of the head is slightly deviated in the radial direction of the disc. In the flexible magnetic disc apparatus of the normal 3.5 inches, the position is deviated by 1.5mm. Accordingly, on the side 0 and the side 1 of the disc, both the track position and the zone position are required to be deviated. The rift of the zone is desired to be almost the same radius because of the physical magnetic characteristic. Thus, in the side 0 and the side 1, the width (namely, the number of the tracks to be included in the zone) of the zone becomes different. In Fig. 4, the width of the first zone 71 on the side 0 is narrower in width than the first zone 73 on the side 1. The magnetic record characteristics may be improved in such a manner.

As is clear from the foregoing description, according to the arrangement of the present invention, such an effect as described hereinabove can be obtained. Even in a case where the increase in the record capacity may be provided, the completely same data face servo-control may be utilized and the processing, the electronic circuit as simple in degree as before can be used.

As the servo-sectors are connected radially from the internal periphery of the magnetic disc to the external periphery, realizing the capacity increase with the data sector number of the external peripheral side zone being made more than the zone of the internal peripheral side, the positioning operation may be simplified with heads being moved, accessed with high speeds astride or across the zone independently of the rift of the zone with the servo-detection time interval being almost constant.

As the servo-sector and the data sector are independent, the record density is easy (to increase the number of the data sectors) to increase only in the data sector with the servo-sector being as it is even when the record capacity is increased with the adoption of the new magnetic material. Especially, in a case of a mass flexible magnetic disc and flexible magnetic disc apparatus, the capacity increase may be easily effected with the data face servo-control and the positioning mechanism being as they are.

Also, even in this case, there is an economic advantage in that the format writer apparatus (servo-writer apparatus), namely, an apparatus for writing servo-pattern signals into the raw disc can be used without being changed.

## Claims

1. A magnetic disc comprising a plurality of concentric circular data record tracks formed on the data recording face thereof, said data surface being divided into a number K of concentric track group zones from a first zone on the inside of the disc to a zone K at the outer periphery, each zone containing a group of tracks with a plurality of data sectors formed thereon the number (s) of data sectors per track being constant in each track group zone, but varying from zone to zone, characterized in that the data sectors are arranged in data sector groups separated by a number J of servo sectors, J being constant for all track group zones so that the servo sectors are substantially aligned in a radial direction across the disc and the number (s) of data sectors per sector group in a track group zone is calculated on the basis of the following formula:

$$s = K + M,$$

where s, K, J and M are positive integers.

2. A magnetic disc described in accordance with the claim 1, wherein the arrangement of many concentric circle-shaped data record tracks formed on the data record face and track group zones k on a first face of the disc are radially offset from the track group zones on a reverse side of the disc.

3. A magnetic disc described in accordance with the claim 1, wherein the number of the concentric circle-shaped data record tracks to be included in the track group of a p zone is different on the first and the reverse sides of the magnetic disc.

4. A magnetic disc described in accordance with the claim 1, wherein K is 2, J is 28, M is 1.

5. A magnetic disc described in accordance with the claim 1, wherein K is 3, J is 28, M is 2.

6. A magnetic disc described in accordance with the claim 1, wherein K is 4, J is 28, M is 2.

**Patentansprüche**

1. Magnetische Datenträgerscheibe, die mehrere konzentrische, kreisförmige Datenaufzeichnungsspuren aufweist, die auf ihrer Datenaufzeichnungsoberfläche gebildet sind, wobei die Datenoberfläche von einer ersten Zone an der Innenseite der Datenträgerscheibe zu einer Zone K an der äußeren Peripherie in K konzentrische Spurgruppenzonen aufgeteilt ist, wobei jede Zone eine Spurengruppe mit mehreren darin gebildeten Datensektoren aufweist, wobei die Zahl (s) der Datensektoren pro Spur in jeder Spurgruppenzone konstant ist, sich jedoch von Zone zu Zone ändert, **dadurch gekennzeichnet**, daß die Datensektoren in Datensektorgruppen angeordnet sind, die durch J Servosektoren voneinander getrennt sind, wobei J für alle Spurgruppenzonen konstant ist, so daß die Servosektoren im wesentlichen radial quer über die Datenträgerscheibe ausgerichtet sind und die Zahl (s) der Datensektoren pro Sektorgruppe in einer Spurgruppenzone auf der Basis der folgenden Gleichung berechnet wird:

$$s = K + M,$$

wobei s, K, J und M positive, ganze Zahlen sind.

2. Magnetische Datenträgerscheibe gemäß Anspruch 1, bei der die Anordnung von vielen konzentrischen, kreisförmigen Datenaufzeichnungsspuren, die auf der Datenaufzeichnungsfläche gebildet sind, sowie Spurgruppenzonen k auf einer ersten Seite der Scheibe radial zu den Spurgruppenzonen auf einer rückwärtigen Seite der Disk versetzt sind.

3. Magnetische Datenträgerscheibe nach Anspruch 1, bei der die Anzahl der zur Spurgruppe einer p-Zone gehörenden konzentrischen, kreisförmigen Datenaufzeichnungsspuren auf der ersten Seite sich von derjenigen auf der rückwärtigen Seite der magnetischen Datenträgerscheibe unterscheidet.

4. Magnetische Datenträgerscheibe nach Anspruch 1, bei der K 2, J 28 und M 1 ist.

5. Magnetische Datenträgerscheibe nach Anspruch 1, bei der K 3, J 28 und M 2 ist.

6. Magnetische Datenträgerscheibe nach Anspruch 1, bei der K 4, J 28 und M 2 ist.

**Revendications**

1. Disque magnétique comprenant une pluralité de pistes d'enregistrement de données circulaires concentriques qui sont formées sur la face d'enregistrement de données de celui-ci, ladite surface de données étant divisée en un nombre K de zones de groupes de pistes concentriques allant d'une première zone située sur l'intérieur du disque jusqu'à une zone K située à la périphérie extérieure, chaque zone contenant un groupe de pistes ayant une pluralité de secteurs de données qui y sont formés, le nombre (s) de secteurs de données par piste étant constant dans chaque zone de groupe de pistes, mais variant d'une zone à une autre, caractérisé en ce que les secteurs de données sont disposés dans des groupes de secteurs de données séparés par un nombre J de secteurs d'asservissement, J étant constant pour toutes les zones de groupes de pistes de sorte que les secteurs d'asservissement sont sensiblement alignés suivant une direction radiale sur le disque et le nombre (s) de secteurs de données par groupe de secteurs dans une zone de groupe de pistes se calcule sur la base de la formule suivante :

$$s = K + M,$$

où s, K, J et M sont des entiers positifs.

2. Disque magnétique selon la revendication 1, où la disposition de nombreuses pistes d'enregistrement de données en forme de cercles concentriques qui sont formées sur la face d'enregistrement de données et des zones de groupes de pistes k sur une première face du disque sont radialement décalées par rapport aux zones de groupes de pistes se trouvant sur un côté inverse du disque.

3. Disque magnétique selon la revendication 1, où le nombre des pistes d'enregistrement de données en forme de cercles concentriques à inclure dans le groupe de pistes d'une zone p n'est pas le même sur le premier côté et le côté inverse du disque magnétique.

4. Disque magnétique selon la revendication 1, où K vaut 2, J vaut 28 et M vaut 1.

5. Disque magnétique selon la revendication 1, où K vaut 3, J vaut 28, et M vaut 2.

6. Disque magnétique selon la revendication 1, où K vaut 4, J vaut 28, M vaut 2.

## Fig. 1

21 servo sector

11 first sector group

12 second sector group

21 servo sector

21 servo sector

13 third sector group

14 J sector group

21 servo sector

15 data sector

21 servo sector

15 data sector

4 K zone

15 data sector

15 data sector

3 second zone

2 first zone

15 data sector

1 magnetic disc

EP 0 491 264 B1

Fig. 2

Fig. 3

21 servo sector

51 first sector group

52 second sector group

21 servo sector

21 servo sector

54 28th sector group

53 third sector group

21 servo sector

21 servo sector

45 forth zone

44 third zone

43 second zone

42 first zone

EP 0 491 264 B1

Fig. 4

67 positioning mechanism
68 control circuit
66 positioning apparatus
65 head carriage
64 magnetic head
63 magnetic head
62 slider
61 slider
1 magnetic disc